(19) Europäisches Patentamt
European Patent Office
Office européen des brevets

(11) Veröffentlichungsnummer: **0 339 200 A1**

(12) # EUROPÄISCHE PATENTANMELDUNG

(21) Anmeldenummer: **89102833.4**

(22) Anmeldetag: **18.02.89**

(51) Int. Cl.4: **C08B 3/16 , C08B 13/00 , C08B 15/06 , C08B 37/08 , //B01D13/04,A61M1/16**

(30) Priorität: **25.02.88 DE 3805966**

(43) Veröffentlichungstag der Anmeldung: **02.11.89 Patentblatt 89/44**

(84) Benannte Vertragsstaaten: **AT BE CH DE ES FR GB GR IT LI LU NL SE**

(71) Anmelder: **Akzo N.V.**
**Postbus 9300 Velperweg 76**
**NL-6800 SB Arnhem(NL)**

(72) Erfinder: **Diamantoglou, Michael, Dr.**
**Kolpingstrasse 4**
**D-8765 Erlenbach/Main(DE)**

(74) Vertreter: **Fett, Günter**
**Akzo Patente GmbH Kasinostrasse 19 - 23**
**D-5600 Wuppertal 1(DE)**

(54) **Modifizierte Cellulose für biocompatible Dialysemembranen III und Verfahren zu deren Herstellung.**

(57) Modifizierte Cellulose für biocompatible Dialysemembranen, die eine durch die Formel

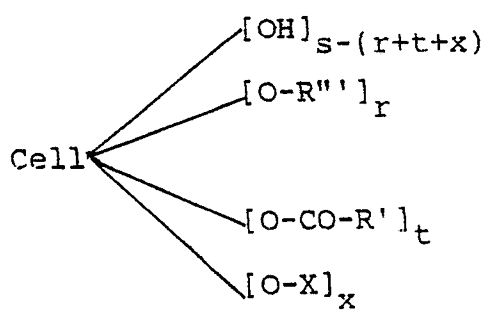

wiedergegebene Struktur aufweist, worin Cell Cellulose oder Chitin jeweils ohne Hydroxylgruppen ist, s bei Cellulose 3 und bei Chitin 2 beträgt und
worin
**R′** : $CH_3$ und/oder $C_2H_5$ und/oder $C_3H_7$,
**X** : definierte funktionelle Gruppen, und
wobei **R‴** : R bedeuten,
und
**x+t** : 0,75 - 2,85
**t** : 0 - 2,85,
**x** : 0 - 2,85,
**r** : 0 - 1
beträgt.
Beansprucht wird auch ein Verfahren zur Herstellung der Cellulosederivate.

EP 0 339 200 A1

## Modifizierte Cellulose für biocompatible Dialysemembranen III und Verfahren zu deren Herstellung

Die Erfindung betrifft Cellulosederivate für biocompatible Dialysemembranen.

Aus der US-PS 4 278 790 sind Celluloselösungen unter Verwendung von Lithiumchlorid und Dimethylacetamid als Lösungsmittel bekannt. Die Lösungen können bis zu 8% Lithiumchlorid und bis zu etwa 3 % Cellulose enthalten. In diesen Celluloselösungen können auch Cellulosederivate hergestellt werden. Gemäß der US-Patentschrift werden die Lösungen in der Weise hergestellt, daß in ein Gemisch von Dimethylacetamid und Lithiumchlorid Cellulose eingetragen und zunächst für eine längere Zeit auf etwa 150°C erhitzt wird. Später wird die dann gebildete Lösung auf Raumtemperatur unter Rühren abgekühlt.

Außerdem sind aus der DE-OS 33 12 022 sowie der DE-OS 32 46 417 wasserunlösliche Fasern aus Celluloseestern bekannt. Sie weisen ein extrem hohes Adsorptionsvermögen für Wasser und physiologische Flüssigkeiten auf. Das mag für manche Einsatzgebiete ein Vorteil sein, für viele ist es jedoch ein Nachteil.

Die aus den US-Patenten 2 759 925, 2 856 399 und 3 505 312 bekannten Celluloseacetaphthalate weisen hohen Phthaloyl-Gehalt auf und sind in Salzform wasserlöslich und deshalb als Membranmaterialien ungeeignet. Liegen die Produkte nicht in der Salzform vor, so sind sie wasserunlöslich und dementsprechend auch in den bei der Membranbildung üblichen Lösungsmitteln mit den üblichen hydrophilen Zusätzen unlöslich.

In der US-Patentschrift 3 745 202 und der DOS 2 300 496 werden Verfahren zur Herstellung asymmetrischer Membranen von Cellulosederivaten mit Ester- und/oder Ethergruppen beschrieben.

Das US-Patent 4 590 265 beschreibt die durch Oxidation von Celluloseestern mit Ozon entstehenden Produkte. Die Celluloseprodukte, die durch Oxidation von Cellulose oder Cellulosederivaten synthetisiert wurden, wiesen unabhängig vom Oxidationsmittel stets eine schlechte Biokompatibilität auf.

Aus der DE-PS 2 705 735 ist eine Dialysemembran für die Hämodialyse mit daran chemisch gebundenen antithrombogenen Verbindungen bekannt, wobei die Dialysemembran aus zwei oder mehreren Schichten einer aus Cuoxamcelluloselösungen regenerierten Cellulose besteht, die jeweils aus getrennt gespeisten Schlitzen einer Spinndüse erhalten worden ist, die antithrombogene Wirkstoffe chemisch gebunden enthält.

Die japanische Patentanmeldung JP-OS 60-203 265 beschreibt hochmolekulare Celluloseprodukte zur Herstellung von medizinischen Instrumenten mit Anticoagulanteigenschaften. Es handelt sich dabei um Mischungen polykationischer und polyanionischer Cellulosederivate, die üblicherweise durch Vermischen entsprechender Polymerlösungen erhalten werden. Derartige wasserunlösliche Salze sind als Membranmaterialien ungeeignet, da stets die Gefahr besteht, daß sie durch Umsalzeffekte in eine wasserlösliche oder in Wasser stark quellbare Verbindung umgewandelt werden.

Es ist aber auch bereits in der DE-OS 17 20 087 vorgeschlagen worden, dadurch daß das Polymermaterial der Membran mit einem Alkylhalogenid umgesetzt und danach das erhaltene Material mit einem Alkalisalz einer antithrombogenen Verbindung mit kationischem Rest (z.B. Heparin oder eine Heparinoidverbindung) umgesetzt wird, die Gefahr der Gerinnung des Blutes zu verringern. Zu den möglichen Alkylhalogeniden werden dabei auch Halogenalkyldialkylamine gerechnet. Auch Cellulose, jedoch im wesentlichen Celluloseacetat, zählt zu den möglichen Polymeren.

Eine antithrombogene Wirkung dieser bekannten Dialysemembranen wird nur beobachtet, wenn der Substitutionsgrad der modifizierten Cellulose hoch ist, d.h. größer als mindestens 0,1 und in einem gesonderten Schritt eine Vorheparinisierung mit relativ hoher Heparinkonzentration (0,1 bis 1 Gew. % Lösungen) durchgeführt wird.

Aus der DE-OS 35 24 596 ist bereits eine Dialysemembran mit verbesserter Biocompatibilität bekannt, die sich dadurch auszeichnet, daß der mittlere Substitutionsgrad einer modifizierten Cellulose 0,02 bis 0,07 beträgt. Vorzugsweise enthält die bekannte Dialysemembran aus modifizierter Cellulose solche modifizierte Cellulose, die eine durch die Formel

Cellulose-R′-X-Y

wiedergegebene Struktur aufweist, wobei

X für $-NR''-$ und/oder $-\overset{\oplus}{N}R''_2-$ und/oder $-S-$ und/oder $-SO-$ und/oder $-SO_2-$ und/oder $-\underset{O}{\overset{}{C}}(=O)-\underset{R}{N}-$ und/oder $-CO-O-$ und/oder $-O-$,

Y für $-R$ und/oder $-NR_2$ und/oder $-Si(OR'')_3$ und/oder $-SO_3H$ und/oder $-COOH$ und/oder $-PO_3H_2$ und/oder $-\overset{\oplus}{N}HR_2$ bzw. deren Salze,

R′ für eine Alkylengruppe und/oder Cycloalkylengruppe und/oder Arylengruppe mit insgesamt 1 bis 25 C-Atomen,

R'' für ein Wasserstoffatom oder R und

R für eine Alkylgruppe mit 1 bis 5 C-Atomen und/oder eine Cycloalkylgruppe und/oder Arylgruppe steht.

Diese bekannte Dialysemembran war bereits in der Lage, Blutgerinnung, Leucopenie und Komplementaktivierung in erheblichem Umfange zu reduzieren. Eine Adsorption von Beta-2-Mikroglobulin konnte jedoch in nennenswertem Umfange nicht erreicht werden.

In der deutschen Patentanmeldung P 37 23 897.3 sind Cellulosederivate mit der allgemeinen Formel

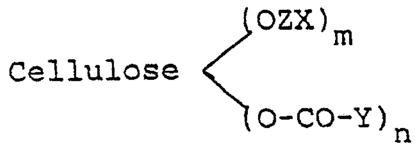
,

worin

-Z- einen gegebenenfalls substituierten Alkylen-, Alkenylen-, Alkinylen-, Cycloalkylen- oder Benzylen- oder Xylylenrest,

X -H, $-NR_2$, $-\overset{\oplus}{N}R_3$, -CN, -COOH, $-SO_3H$, $-PO(OR)_2$, $-CONR_2$ oder $-Si(OR)_3$ bedeutet,

wobei

R ein Wasserstoffatom oder eine Alkyl- oder Alkenylgruppe mit 1 bis 25 C-Atomen, Cycloalkyl-, Tolyl oder Phenylgruppe bedeutet

und

Y eine gegebenenfalls substituierte Alkyl-, Alkenyl-, Alkinylgruppe mit 1 bis 36 C-Atomen, eine Cycloalkylgruppe oder eine Phenyl-, Tolyl-oder Benzylgruppe oder ein

$-(CH_2)_r-COOH$, 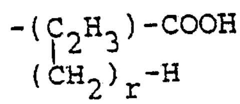 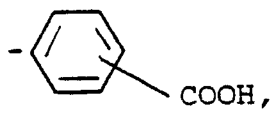

oder (-CH = CH-COOH)Rest oder NH-R-Rest ist und R die gleiche Bedeutung wie oben hat

und

r = 1 - 20

m = 0 - 2,5

n = 0,2 bis 2,95

mit der Maßgabe, daß bei m = 0 n ≧ 1,55 ist, wenn Y ein Alkyl-Rest mit 1 - 5 C-Atomen, ein $-(CH_2)_r-COOH$-Rest mit r = 0, 1 oder 2 oder ein Rest der Phthalsäure ist,

sowie

der Polymerisationsgrad mehr als 400 beträgt, und die herstellbar sind durch homogene Umsetzung in einem Gemisch von Dimethylacetamid und/oder N-Methylpyrrolidon mit LiCl nach Aktivierung des Celluloseausgangsproduktes ohne Anwesenheit von LiCl,

deren Herstellung und deren Verwendung zu Membranen und Fasern beschrieben.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei Dialysemembranen aus regenerierter Cellulose häufig bei der Behandlung eines Nierenkranken mit Dialysatoren mit Cellulose-Membranen in der ersten Zeit der Dialysebehandlung ein vorübergehender Leukozytenabfall auf. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/$mm^3$.

Die Leukopenie bei der Dialyse ist am stärksten ausgeprägt 15 bis 20 Min. nach Beginn, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer Dialysator angeschlossen, tritt wieder Leukopenie im

gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kidney International Vol. 24, Seite 764 ff, 1983 und D.E. Chenoweth, Asaio-Journal Vol. 7, Seite 44 ff, 1984.

Das Karpal-Tunnel-Syndrom wird durch modifizierte Cellulosederivate beeinflußt. Es besteht aber ein erhebliches Bedürfnis nach weiteren Modifizierungen der Cellulose, um auch dieses Phänomen möglichst weitgehend auszuschalten.

Aufgabe der vorliegenden Erfindung war es, modifizierte Cellulose zur Verfügung zu stellen, die hinsichtlich der Leukopenie, der Komplementaktivierung und der Blutgerinnung Membranen optimale Eigenschaften verleiht und darüber hinaus das für den Karpal-Tunnel-Effekt verantwortliche Beta-2-Microglobulin in erheblichem Umfange zu adsorbieren in der Lage ist.

Gelöst wird diese Aufgabe durch eine modifizierte Cellulose, die dadurch gekennzeichnet ist, daß die modifizierte Cellulose eine durch die Formel

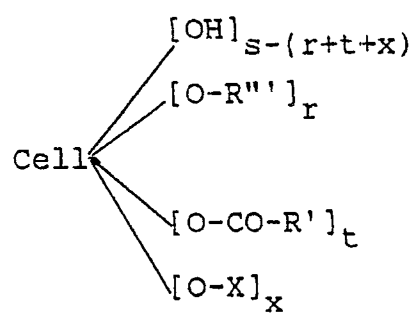

wiedergegebene Struktur aufweist, worin Cell das Gerüst des unmodifizierten Cellulosemoleküls oder des Chitinmoleküls jeweils ohne Hydroxylgruppen ist, s beim unmodifizierten Cellulosemolekül 3 und beim Chitinmolekül 2 beträgt und

worin

**R'**: $CH_3$ und/oder $C_2H_5$ und/oder $C_3H_7$,

**X** : CO-R und/oder CS-R und/oder $CO-Cr''_2-CO-CHR''_2$ und/oder CO-OR und/oder CONH-R und/oder $CONR''R$ und/oder CSNH-R und/oder $CSNR''R$ und/oder $SO_2-R$ und/oder $SO_2NR''R$ und/oder SO-R und/oder $SONR''R$ und/oder $PO_3H_2$ (Salz) und/oder $PO_2R''R$ und/oder $POR''_2$ und/oder $PO(OR'')_2$ und/oder $CR''_2-CR''(OH)-R$ und/oder $CR''_2-CR''(SH)-R$ und/oder $CR''_2-CR''_2-NHR$ und/oder R-COOH (Salz) und/oder $R-SO_3H$ (Salz) und/oder R und/oder $CH_2-CH_2-NR''_2$ und/oder $CH_2-CH_2-SO_2-R$ sind,

wobei

R : Alkyl und/oder Alkenyl und/oder Alkinyl (geradkettig und/oder verzweigt und ggf. substituiert, wobei die Kohlenstoffkette auch durch Heteroatome wie O, S, N, P, Si sowie CO- oder COO-Gruppe unterbrochen sein kann) und/oder Cycloalkyl (ggf. mit Heteroatomen und/oder substituiert) und/oder Aryl und/oder

Arylalkyl und/oder Arylalkenyl und/oder Arylalkinyl (ggf. mit Heteroatomen und/oder substituiert) und/oder Bisaryl (ggf. substituiert) und/oder Rest einer kondensierten aromatischen Verbindung (ggf. substituiert) und/oder Rest einer heterocyclischen Verbindung (ggf. substituiert) ist und
mit **"substituiert"** neben Resten im Sinne von R auch folgende Gruppen gemeint sind:
$-NR''_2$ und/oder $-N^{\oplus}R''_3$ und/oder -COOH auch als Salz und/oder $-COOR''$ und/oder $-CONR''_2$ und/oder $-CO-R''$ und/oder -CSOH auch als Salz und/oder $-CSOR''$ und/oder $-CSNR''_2$ und/oder $-SO_3H$ auch als Salz und/oder $-SO_3R''$ und/oder $-SO_2NR''_2$ und/oder $-SR''$ und/oder $-SOR''$ und/oder $-SONR''_2$ und/oder $-PO_3H_2$ auch als Salz und/oder $-PO(OR'')_2$ und/oder $-PO_2H(NR''_2)$ und/oder $-PO(NR''_2)_2$ und/oder $-PO_2H_2$ und/oder $-POH(OR'')$ und/oder -CN und/oder $-NO_2$ und/oder $-OR''$ und/oder Halogen und/oder $-Si(OR'')_3$
wobei **R**$''$ : H oder R ist
und R$'''$ : R bedeutet,
und
**x + t** : 0,75 - 2,85,
T : 0 - 2,85,
**x** : 0 - 2,85,
**r** : 0 - 1
beträgt.

Vorzugsweise beträgt der Polymerisationsgrad 100 -500, insbesondere 150 - 350.

Wenn x + t im Bereich von 1,10 bis 2,35 liegt, werden modifizierte Cellulosen erhalten, die sich dadurch auszeichnen, daß sie eine ausgeprägte Reduzierung der C5a-Aktivierung zeigen.

Vorzugsweise liegt r im Bereich von 0,05 bis 0,60.

Gegenstand der Erfindung ist auch ein Verfahren zur Herstellung der erfindungsgemäßen modifizierten Cellulosen, welches sich dadurch auszeichnet, daß Cellulose, und/oder Cellulosether und/oder Chitin und/oder Chitinether mit Säurechloriden und/oder Säureanhydriden und/oder Säuren und/oder Säureestern und/oder Ketenen und/oder Diketenen und/oder Chlorkohlensäureestern und/oder Kohlensäurediestern und/oder 2,5-Diketooxazolidinen und/oder Isatosäureanhydrid und/oder Isocyanaten und/oder Carbamoylchloriden und/oder Thiocyanaten und/oder Thiocarbamoylchloriden und/oder Sulfonsäurechloriden und/oder Sulfonsäureanhydriden und/oder N-Chlor-sulfonamiden und/oder Sulfinsäurechloriden und/oder N-Chlor-sulfinamiden und/oder Phosphorsäureanhydrid und/oder Phosphonsäureanhydriden und/oder Phosphonsäurechloriden und/oder Phosphorigsäure und/oder Phosphinsäureanhydriden und/oder Ethylenoxid- und/oder Ethylensulfid- und/oder Ethylenimino- und/oder Lacton- und/oder Sulton- und/oder spaltbaren Onium-Verbindungen und/oder Alkylaminoethanolschwefelsäureestern und/oder Alkylsulfonethanolschwefelsäureestern umgesetzt werden.

Im Rahmen der vorliegenden Erfindung wurde die Komplement-Aktivierung anhand der Fragmente C5a beurteilt. Dazu wurden in vitro 300 ml heparinisiertes Blutplasma über einen Zeitraum von 4 Std. mit einem Plasmafluß von 100 ml/min durch einen Dialysator mit 1 $m^2$ effektiver Austauschfläche rezirkuliert. In dem Plasma wurden die C5a-Fragmente mit Hilfe der RIA-Methode (Upjohn-Test) bestimmt. Die relative Komplement-Aktivierung für den jeweiligen Meßzeitpunkt wurde durch Bildung des Verhältnisses der Konzentration zum Zeitpunkt der Probenahme mit dem Anfangswert in Prozent errechnet. Zur Bewertung wurde der Meßwert nach 4 Std. Rezirkulationszeit herangezogen. Flachmembranen werden mit heparinisiertem Blutplasma 3 Stunden inkubiert und anschließend die C5a-Fragmente bestimmt.

Die Erhöhung des beta-2-Mikroglobulinspiegels bei Langzeit-Dialysepatienten wird nach Verwendung von Membranen aus regenerierter Cellulose beobachtet und wird darauf zurückgeführt, daß diese Membranen im Molekularbereich von 1000 bis 20.000 weniger durchlässig sind und die Mikroglobuline bei der Dialyse deshalb nicht in ausreichendem Maße entfernt werden. An die üblichen Membranen aus regenerierter Cellulose adsorbiert sich das beta-2-Mikroglobulin nicht in nennenswertem Umfang. Hierzu aber können in unerwarteter Weise die erfindungsgemäßen Cellulosederivate beitragen.

Gemessen wird im Rahmen der Erfindung der beta-2 -Mikroglobulingehalt, der an die Membran adsorbiert wird, auf folgende Weise:

In je 500 mg Substanz (Dialysemembran) werden 10 ml Humanblutplasma gegeben und 30 Minuten bei 37 °C inkubiert. Das Humanblutplasma hat einen Gehalt an beta-2-Mikroglobulin von 13,67 mg/l. Die Probe wird bei 3000 Upm 15 min zentrifugiert. Im Überstand wird der Gehalt an beta-2-Mikroglobulin festgestellt. Anschließend wird die Probe 2 x mit je 10 ml Phosphat-buffer-saline gewaschen. In den Waschflüssigkeiten wird der Mikroglobulingehalt ebenfalls festgestellt. Aus der Differenz zwischen ursprünglichem und nicht absorbiertem beta-2-Mikroglobulin läßt sich die prozentuale Menge an absorbiertem beta-2-Mikroglobulin errechnen.

Der Durchschnittspolymerisationsgrad DP wurde in einer Cuen-Lösung nach DIN 54270 bestimmt.

Der Veretherungsgrad und/oder Veresterungsgrad wurden anhand der Analysenergebnisse bestimmt, die

für Substituenten bekannt und typisch sind, beispielsweise Stickstoff nach Kjeldahl, Schwefel nach Schöniger oder Phosphor nach der Molybdatmethode, gegebenenfalls aus der Differenz vor und nach einer Verseifung.

Die Erfindung wird anhand der nachfolgenden Beispiele näher erläutert.

Beispiel 1

In einem 1 l Dreihalskolben wurden in einer Mischung aus 300 ml Methylenchlorid, 40,4 g (0,64 Mol) Essigsäure und 112,3 g (1,1 Mol) Essigsäureanhydrid 35,36 g (0,2 Mol) Diethylaminoethylcellulose (DS = 0,15) suspendiert. Danach wurden 3,62 g (0,036 Mol) Perchlorsäure, gelöst in 10 g (0,16 Mol) Essigsäure, langsam zugetropft. Dabei stieg die Temperatur bis auf 45 °C. Nach 1,5 Stunden entstand eine klare viskose Lösung. Nach Zugabe von 3,92 g (0,04 Mol) Kaliumacetat wurde das Methylenchlorid abdestilliert, das Reaktionsprodukt mit Methanol gefällt und gewaschen und bei 60 °C im Vakuumtrockenschrank getrocknet. Dabei wurden 52,5 g eines Diethylaminoethylcelluloseacetates mit folgender Spezifikation erhalten:

Acetylgruppen-Gehalt : t = 2,3
Diethylaminoethylgruppen-Gehalt : r = 0,13
Polymerisationsgrad : DP = 270

47 g dieses Diethylaminoethyl-0,13-Cellulose-2,3-acetates wurden in 360 g Ameisensäure gelöst. Die Lösung wurde mit 50 g Wasser und 70 g PEG 400 verdünnt, filtriert, entlüftet und zu Kapillarmembranen versponnen. Diese wiesen nachstehende Eigenschaften auf:

Wanddicke : 10µm
Innendurchmesser : 200 µm
Ultrafiltrationsrate : 6,3 ml/h•$m^2$•mm•Hg bei 37 °C
Vitamin-B12-Permeabilität : 6,5•$10^{-3}$ cm/min bei 37 °C

Gegenüber der unmodifizierten Cellulose beträgt die C5a-Reduktion 98%.

Beispiele 2 - 26

Auf der Grundlage der Arbeitsweise von Beispiel 1 wurden die in den Tabellen 1 und 2 aufgeführten Polysaccharidderivate hergestellt, nach bekannten Verfahren zu Flachmembranen verarbeitet und deren Komplementaktivierung anhand der Fragmente C5a bestimmt.

Beispiel 27

Auf der Grundlage der Arbeitsweise von Beispiel 1 wurde Chitin acetyliert, und das resultierende Produkt mit einem Gesamtacetylgruppengehalt von DS = 2,05 wurde mit Phenylisocyanat zu einem Phenylcarbamat-derivat umgesetzt. In einem 1 l Dreihalskolben wurden in 500 ml Toluol 49,63 g (0,2 Mol) des acetylierten Chitins suspendiert. Zur Mischung wurden 11,90 g (0,10 Mol) Phenylisocyanat und 15,80 g (0,20 Mol) Pyridin (Katalysator) zugesetzt. Zur Vervollständigung der Reaktion wurde die Mischung 48 Stunden am Rückfluß erhitzt. Das Reaktionsprodukt wurde abfiltriert, mit kaltem und heißem Methanol gewaschen und im Vakuumtrockenschrank bei 60 °C getrocknet. Dabei wurde ein Phenylcarbamatchitin -derivat mit folgenden Spezifikationen erhalten:

Acetylgruppen-Gehalt : t = 2,05
Phenylcarbamatgruppen-Gehalt : x = 0,15

Die aus dieser Chitinverbindung hergestellten Membranen wiesen gegenüber der unmodifizierten Cellulose eine C5a-Reduktion von 98% auf.

Tabelle 1

| (Polysaccharidgerüst = Cellulose) | | | | | | | |
|---|---|---|---|---|---|---|---|
| Beispiel Nr. | R''' | r | R' | t | X | x | % C5a-Red. |
| 2 | $C_2H_4$-$N(C_2H_5)_2$ | 0,33 | $CH_3$ | 2,26 | - | 0 | 93 |
| 3 | $C_2H_4$-$N(C_2H_5)_2$ | 0,17 | $CH_3$ | 1,95 | $C_2H_5CO$ | 0,30 | 99 |
| 4 | $C_2H_4$-$N(C_2H_5)_2$ | 0,11 | $CH_3$ | 2,10 | $C_{17}H_{35}CO$ | 0,05 | 90 |
| 5 | $C_2H_4$-$N(C_2H_5)_2$ | 0,08 | $CH_3$ | 2,25 | $C_{11}H_{23}CH=C(CH_2COOH)$-CO | 0,06 | 95 |
| 6 | $C_2H_4$-$N(C_2H_5)_2$ | 0,15 | $CH_3$ | 2,15 | $C_6H_5$-NHCO | 0,13 | 100 |
| 7 | $CH_2$-COOH | 0,09 | $CH_3$ | 2,30 | - | 0 | 85 |
| 8 | $CH_2$-COOH | 0,07 | $CH_3$ | 2,25 | $C_6H_4(COOH)$-CO | 0,06 | 94 |
| 9 | $C_2H_4$-$SO_3H$ | 0,11 | $CH_3$ | 2,05 | - | 0 | 89 |
| 10 | $C_2H_4$-$SO_3H$ | 0,10 | $CH_3$ | 2,22 | HOOC-$CH_2$-$CH_2$-CO | 0,12 | 97 |
| 11 | $C_2H_4$-$PO_3H_2$ | 0,05 | $CH_3$ | 2,18 | - | 0 | 86 |
| 12 | $C_2H_4$-$PO_3H_2$ | 0,07 | $CH_3$ | 1,85 | $C_2H_5CO$ | 0,25 | 92 |
| 13 | $C_{18}H_{37}$ | 0,05 | $C_3H_7$ | 2,30 | - | 0 | 80 |
| 14 | $C_2H_4SO_2C_{18}H_{37}$ | 0,08 | $CH_3$ | 2,23 | - | 0 | 77 |
| 15 | $CH_2CH(OH)C_{10}H_{21}$ | 0,10 | $CH_3$ | 2,27 | - | 0 | 79 |
| 16 | $CH_2CH(OH)CH_2OOCC_{17}H_{35}$ | 0,06 | $CH_3$ | 2,20 | - | 0 | 75 |
| 17 | $C_3H_6COOH$ | 0,10 | $CH_3$ | 2,28 | - | 0 | 82 |
| 18 | $CH(COOH)_2$ | 0,07 | $CH_3$ | 2,03 | HOOC-CH=CH-CO | 0,08 | 98 |
| 19 | $C_6H_5$-$CH_2$ | 0,10 | $C_2H_5$ | 2,25 | - | 0 | 72 |
| 20 | --- | 0 | $CH_3$ | 2,25 | $C_{15}H_{31}CH=C(CH_2COOH)CO$ | 0,07 | 96 |
| 21 | --- | 0 | $CH_3$ | 2,30 | $HOOCCH(SO_3H)CH_2CO$ | 0,09 | 98 |

Tabelle 2

| (Polysaccharidgerüst = Chitin) | | | | | | | |
|---|---|---|---|---|---|---|---|
| Beispiel Nr. | R''' | r | R' | t | X | x | % C5a-Red. |
| 22 | $C_2H_4$-$N(C_2H_5)_2$ | 0,12 | $CH_3$ | 0,95 | - | 0 | 95 |
| 23 | $C_2H_4$-$N(C_2H_5)_2$ | 0,12 | $CH_3$ | 0,90 | $C_{17}H_{33}CO$ | 0,05 | 97 |
| 24 | $CH_2$-COOH | 0,08 | $CH_3$ | 1,00 | - | 0 | 81 |
| 25 | --- | 0 | $CH_3$ | 0,95 | $C_{11}H_{23}CH=C(CH_2COOH)CO$ | 0,10 | 93 |
| 26 | --- | 0 | $CH_3$ | 0,95 | $HOOCC_6H_4CO$ | 0,20 | 95 |

## Ansprüche

1. Modifizierte Cellulose, dadurch gekennzeichnet, daß die modifizierte Cellulose eine durch die Formel

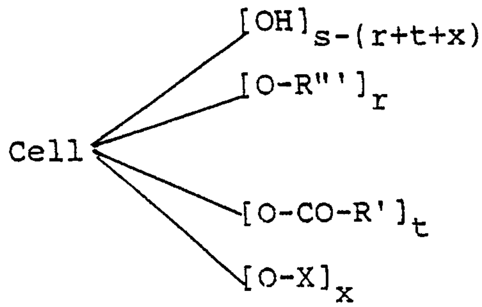

wiedergegebene Struktur aufweist, worin Cell das Gerüst des unmodifizierten Cellulosemoleküls oder des Chitinmoleküls jeweils ohne Hydroxylgruppen ist, s beim unmodifizierten Cellulosemolekül 3 und beim Chitinmolekül 2 beträgt und
worin
**R′** : $CH_3$ und/oder $C_2H_5$ und/oder $C_3H_7$,
**X** : CO-R und/oder CS-R und/oder CO-$CR''_2$-CO-$CHR''_2$ und/oder CO-OR und/oder CONH-R und/oder CONR″R und/oder CSNH-R und/oder CSNR″R und/oder $SO_2$-R und/oder $SO_2NR''R$ und/oder SO-R und/oder SONR″R und/oder $PO_3H_2$ (Salz) und/oder $PO_2R''R$ und/oder $POR''_2$ und/oder $PO(OR'')_2$ und/oder $CR''_2$-CR″(OH)-R und/oder $CR''_2$-CR″(SH)-R und/oder $CR''_2$-$CR''_2$-NHR und/oder R-COOH (Salz) und/oder R-$SO_3H$ (Salz) und/oder R und/oder $CH_2$-$CH_2$-$NR''_2$ und/oder $CH_2$-$CH_2$-$SO_2$-R sind,
wobei
**R** : Alkyl und/oder Alkenyl und/oder Alkinyl (gerad-kettig und/oder verzweigt und ggf. substituiert, wobei die Kohlenstoffkette auch durch Heteroatome wie O, S, N, P, Si sowie CO- oder COO-Gruppe unterbrochen sein kann) und/oder Cycloalkyl (ggf. mit Heteroatomen und/oder substituiert) und/oder Aryl und/oder Arylalkyl und/oder Arylalkenyl und/oder Arylalkinyl (ggf. mit Heteroatomen und/oder substituiert) und/oder Bisaryl (ggf. substituiert) und/oder Rest einer kondensierten aromatischen Verbindung (ggf. substituiert) und/oder Rest einer heterocyclischen Verbindung (ggf. substituiert) ist und
mit **"substituiert"** neben Reste im Sinne von R auch folgende Gruppen gemeint sind:
-$NR''_2$ und/oder -$N^{\oplus}R''_3$ und/oder -COOH auch als Salz und/oder -COOR″ und/oder -$CONR''_2$ und/oder -CO-R″ und/oder -CSOH auch als Salz und/oder -CSOR″ und/oder -$CSNR''_2$ und/oder -$SO_3H$ auch als Salz und/oder - $SO_3R''$ und/oder -$SO_2NR''_2$ und/oder -SR″ und/oder -SOR″ und/oder -$SONR''_2$ und/oder -$PO_3H_2$ auch als Salz und/oder -$PO(OR'')_2$ und/oder -$PO_2H(NR''_2)$ und/oder -$PO(NR''_2)_2$ und/oder -$PO_2H_2$ und/oder -POH(OR″) und/oder -CN und/oder -$NO_2$ und/oder -OR″ und/oder Halogen und/oder -$Si(OR'')_3$,
wobei R″ : H oder R ist
und **R‴** : R bedeutet,
und
**x+t** : 0,75 - 2,85
**t** : 0 - 2,85,
**x** : 0 - 2,85,
**r** : 0 - 1
beträgt.

2. Modifizierte Cellulose nach Anspruch 1, dadurch gekennzeichnet, daß der Polymerisationsgrad 100 - 500 beträgt.

3. Modifizierte Cellulose nach Anspruch 2, dadurch gekennzeichnet, daß der Polymerisationsgrad 150 - 350 beträgt.

4. Modifizierte Cellulose nach einem oder mehreren der Ansprüche 1 bis 3, dadurch gekennzeichnet, daß x+t im Bereich von 1,10 bis 2,35 liegt.

5. Modifizierte Cellulose nach einem oder mehreren der Ansprüche 1 bis 4, dadurch gekennzeichnet, daß r im Bereich von 0,05 bis 0,60 liegt.

6. Verfahren zur Herstellung der modifizierten Cellulosen nach einem oder mehreren der Ansprüche 1 bis 5, dadurch gekennzeichnet, daß Cellulose, und/oder Cellulosether und/oder Chitin und/oder Chitinether mit Säurechloriden und/oder Säureanhydriden und/oder Säuren und/oder Säureestern und/oder Ketenen

und/oder Diketenen und/oder Chlorkohlensäureestern und/oder Kohlensäurediestern und/oder 2,5-Diketooxazolidinen und/oder Isatosäureanhydrid und/oder Isocyanaten und/oder Carbamoylchloriden und/oder Thiocyanaten und/oder Thiocarbamoylchloriden und/oder Sulfonsäurechloriden und/oder Sulfonsäureanhydriden und/oder N-Chlor-sulfonamiden und/oder Sulfinsäurechloriden und/oder N-Chlor-sulfinamiden und/oder Phosphorsäureanhydrid und/oder Phosphonsäureanhydriden und/oder Phosphonsäurechloriden und/oder Phosphorigsäure und/oder Phosphinsäureanhydriden und/oder Ethylenoxid- und/oder Ethylensulfid- und/oder Ethylenimino- und/oder Lacton- und/oder Sulton- und/oder spaltbaren Onium-Verbindungen und/oder Alkylaminoethanolschwefelsäureestern und/oder Alkylsulfonethanolschwefelsäureestern umgesetzt werden.

Europäisches Patentamt

# EUROPÄISCHER RECHERCHENBERICHT

Nummer der Anmeldung

EP 89 10 2833

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 582 899 (H. NAKAMURA)<br>* Zusammenfassung *<br>--- | 1 | C 08 B 3/16<br>C 08 B 13/00<br>C 08 B 15/06<br>C 08 B 37/08 //<br>(B 01 D 13/04<br>A 61 M 1:16 ) |
| X | US-A-4 520 192 (H. NAMIKOSHI)<br>* Zusammenfassung *<br>--- | 1,6 | |
| X | US-A-2 131 120 (P. SCHLACK)<br>* Beispiel 10 *<br>--- | 1 | |
| X | US-A-3 314 940 (J.T. LEMMERLING)<br>* Beispiel 3 *<br>--- | 1 | |
| X | US-A-3 816 150 (K. ISHII)<br>* Ansprüche *<br>--- | 1 | |
| X | EP-A-0 219 426 (SHIN-ETSU)<br>* Zusammenfassung *<br>--- | 1,6 | |
| X | US-A-1 991 107 (C.J. MALM)<br>* Anspruch 1 *<br>--- | 1 | RECHERCHIERTE SACHGEBIETE (Int. Cl.4) |
| X | US-A-2 453 275 (G.W. SEYMOUR)<br>* Beispiel; Anspruch 1 *<br>--- | 1 | C 08 B<br>B 01 D |
| X | US-A-4 487 926 (N. ISHIKAWA)<br>* Zusammenfassung *<br>--- | 1 | |
| X | EP-A-0 146 277 (A.E. STALEY)<br>* Beispiel 1; Anspruch 1 *<br>--- | 1 | |
| X | US-A-2 430 911 (W.H. CHARCH)<br>* Ansprüche 1,4,5 *<br>--- | 1 | |
| X | US-A-3 489 743 (C.L. CRANE)<br>* Ansprüche *<br>--- -/- | 1,6 | |

Der vorliegende Recherchenbericht wurde für alle Patentansprüche erstellt

| Recherchenort | Abschlußdatum der Recherche | Prüfer |
|---|---|---|
| DEN HAAG | 24-05-1989 | SOMERVILLE F.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 89 10 2833

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 028 126 (KUREHA KAGAKU KOGYO K.K.)<br>* Zusammenfassung *<br>--- | 1 | |
| A | EP-A-0 172 437 (AKZO)<br>& DE-A-3 524 596 (Cat. D)<br>--- | | |
| P,D<br>X | DE-A-3 723 897 (AKZO)<br>* Zusammenfassung *<br>----- | 1 | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 24-05-1989 | SOMERVILLE F.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument